# EUROPEAN PATENT APPLICATION

(11) **EP 4 656 052 A1**
(43) Date of publication of application: **03.12.2025**
(21) Application number: 24186118.6
(22) Date of filing: 02.07.2024
(51) Int. Cl.: A21C 5/02, A21C 11/00

(54) **AN APPARATUS AND METHOD FOR AUTOMATICALLY PRESSING A PORTION OF DOUGH**

(30) Priority: 31.05.2024 PT 2024119502
(71) Applicant: Ferneto - Máquinas e Artigos para a Indústria Alimentar, S.A., 3840-385 Vagos Vagos (PT)
(72) Inventor: Neto dos Santos, Pedro, 3840-385 Vagos (PT)
(74) Representative: Pereira da Cruz, Joao

(57) **Abstract**

The present disclosure refers to the area of automatically pressing dough, particularly suitable for pressing a portion of dough. Such area includes solutions in which the portion of dough is pressed, or pressed prior to being divided into pieces, or pressed prior to being divided into pieces, the divided pieces being subsequently rounded. The disclosure includes an apparatus (10) for automatically pressing a portion of dough, comprising a base (11) for providing the portion of dough and a press movable between base (11) and a second position (p2) closer to the base (11) wherein the apparatus (10) further comprises movement control means configured to move the press (12), the movement control means being further configured such that when moving from the first position (p1) to the second position (p2), the movement control means control the movement of the press (12) based on a direct measure of the pressure of the press (12) exerted on the portion of dough.

## Description

### TECHNICAL FIELD

The present disclosure refers to the area of automatically pressing dough, particularly suitable for pressing a portion of dough. Such area includes solutions in which the portion of dough may be pressed, or pressed prior to being divided into a plurality of pieces, or pressed prior to being divided into a plurality of pieces, the divided pieces being subsequently rounded.

### PRIOR ART

An apparatus for pressing dough typically is a mechanized apparatus designed to press such dough in a desired amount of pressure.

It comprises a press which tightens the portion of dough against another surface, thus including elements which provide for the movement of the press. It includes a control system, which in turn may include programmable logic controllers (PLCs), sensors, and user interfaces to ensure precision and repeatability in the dividing process.

If including division, it forms an apparatus comprising mechanized elements designed to segment bulk dough into smaller, consistently sized portions with none or minimal manual intervention.

It integrates a series of mechanical and electronic components that facilitate the division of dough in to portions, pieces of dough, and typically features cutting mechanisms (such as blades, wires, or presses), and a control system that allows for adjustments in portion size and division speed.

Typically, automatic dough dividers may also include rounding of the divided pieces, in addition to dividing. Through rounding, the pieces are shaped into a smooth, spherical form. This rounding process may be facilitated through several means, such as curved surfaces, belts, or plates that mimic the manual rounding action, ensuring consistency and uniformity in the final product.

Dough refers to a malleable mixture primarily composed of flour, water, and often yeast or other leavening agents. Typically, dough undergoes fermentation and/or chemical reactions to achieve a specific texture and elasticity. This mixture may also include additional ingredients such as salts, sugars, fats, and various flavourings to enhance taste, texture, and nutritional value. Dough serves as the foundational substance in the preparation of a wide range of baked goods, such as breads, pastries, pizzas, and other culinary products. The specific composition and processing conditions of dough can vary widely, depending on the desired characteristics of the final product, including texture, density, flavour, and appearance.

When pressing a whole portion of dough, the automatic presses and/or dough dividers known in the art usually contain a press and, in the case of dividers, dividing blades or edges which protrude from the press. This assembly vertically moves towards the dough, pressing and/or cutting it into several pieces. The adjustment of the position of the press or the assembly formed by the press and the edges is made by means of a controller. The controller adjusts that position based on a desired height between the press or assembly and a base on which the dough is provided, particularly through a regulation of mechanical cranks coupled to a sensor that issues a stop command or only with mechanical cranks or by presetting a period of time for the movement of the press.

In the case of dividers and rounders, the edges remain at such height for rounding, thus typically leaving a space between the press and the dough, to allow a certain space for the dough to be rounded, within a chamber formed between the press, the dividing edges and the base on which the divided portions are provided.

Still, such solutions require a high control of the equipment and of the conditions of the dough provided in it. In case such settings are not carefully adapted to each case, either the dough may be excessively pressed, leading to inferior properties, or the uniformity of the dough after rounding may be hindered - due to too much space provided in the rounding chamber - or even a subsequent excessive pressure may be made on the dough during rounding - due to the press pressing the dough too much.

The solution of the present disclosure addresses such problems in an innovative manner.

### SUMMARY OF THE PRESENT DISCLOSURE

The present disclosure includes an apparatus for automatically pressing a portion of dough. The apparatus comprises
a base for providing the portion of dough and a press movable between base and a second position closer to the base
wherein the apparatus further comprises movement control means configured to move the press, the movement control means being further configured such that
   when moving from the first position to the second position, the movement control means control the movement of the press based on a direct measure of the pressure of the press exerted on the portion of dough.

The movement control means may be further configured to, upon pressing, control a movement of the press to the first position based on a measure of distance, optionally of distance to the base.

The apparatus may further comprise press mechanized means configured to be actuated by the movement control means and transfer mechanical movement to the press. Pressure may be directly measured based on pressure transducing means associated with the press mechanized means, optionally the pressure transducing means measuring pressure on a main shaft comprised by the press mechanized means.

The second position may correspond to the position in which the pressure exerted by the press on the portion of dough corresponds to a preset pressure.

The apparatus may be further configured to, based on at least one parameter of the portion of dough, automatically adapting the preset pressure.

The distance to the base may be measured based on a sensor measuring the distance between the base and a reference point. The sensor may be an inductive sensor.

The apparatus may be further configured to divide the portion of dough upon pressing and comprises a plurality of dividing edges,
the dividing edges being jointly movable with the press from the first to the second position, and being further movable in relation to the press to a third position in a direction of the base, and thereby dividing the portion of dough provided in the base into a plurality of pieces.

The movement control means may be further configured such that
when moving from the second position to the third position, the movement control means control the movement of the dividing edges in relation to the press based on a measure of distance.

The movement control means may be further configured such to, upon division, control a joint movement of the press and the dividing edges to the first position.

The base may comprise a tray, the tray being removable from the base and being suitable for the dough to be provided on.

The press may comprise a plate, the dividing edges protruding from the plate, when moving beyond the press.

The apparatus may be further configured to round the divided pieces of dough upon division and comprises rounding means associated with the base, wherein
the press is further movable in relation to the dividing edges to a fourth position in a direction away from the base,
the rounding means being configured to subsequently round the plurality of pieces of dough, while the dividing edges are still provided beyond the press upon division.

The movement control means may be further configured such that
when moving from the third position to the fourth position, the movement control means control the movement of the press in relation to the dividing edges based on a measure of distance.

The movement control means may be further configured such to, upon rounding, control a joint movement of the press and the dividing edges to the first position.

The present disclosure may further comprise a method for automatically pressing a portion of dough. The method comprises the steps of
providing a portion of dough on a base,
moving a press from a first position to a second position towards the portion of dough, such that
   when moving from the first position to the second position, the movement of the press is based on a direct measure of the pressure of the press exerted on the portion of dough.

Upon pressing the press may be moved to the first position based on a measure of distance, optionally of distance to the base.

Press mechanized means may transfer mechanical movement to the press, the pressure being directly measured based on pressure transducing means associated with the press mechanized means, optionally the pressure transducing means measuring pressure on a main shaft comprised by the press mechanized means.

The second position may correspond to the position in which the pressure exerted by the press on the portion of dough corresponds to a preset pressure.

The method may further comprise to, based on at least one parameter of the portion of dough, automatically adapt the preset pressure.

The distance to the base may be measured based on the distance between the base and a reference point.

The distance between the base and the reference point may be measured with an inductive sensor.

The method may further comprise dividing the portion of dough upon pressing,
the dividing edges being jointly movable with the press from the first position to the second position, and being further movable in relation to the press to a third position in a direction of the base,
wherein the portion of dough is divided into a plurality of pieces when the dividing edges are provided in the third position.

The movement of the dividing edges in relation to the press may be based on a measure of distance.

Upon division, the press and the dividing edges may be jointly moved back to the first position, optionally based on a measure of distance.

The method may further comprise rounding the divided pieces of dough upon division, the press being further moved in relation to the dividing edges to a fourth position in a direction away from the base, wherein rounding is subsequently performed, while the dividing edges are still provided beyond the press upon division.

The movement from the third position to the fourth position of the press in relation to the dividing edges may be based on a measure of distance.

Upon rounding, the press and the dividing edges may jointly move to the first position, optionally based on a measure of distance to the base.

### DESCRIPTION OF THE DRAWINGS

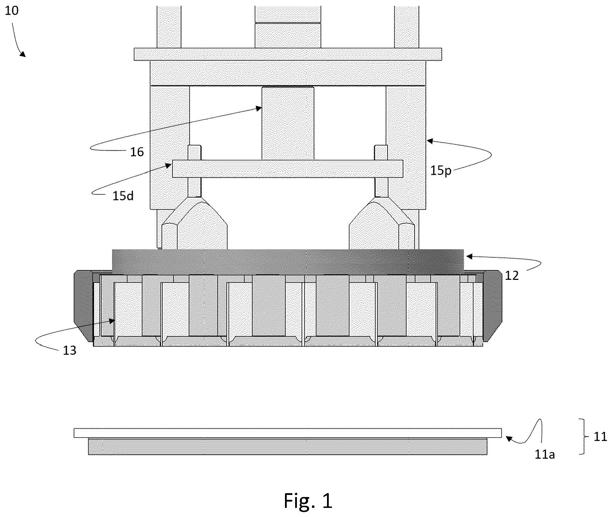

Figure 1 - a cross section representation of an apparatus (10) according to the present disclosure. In such representation, the apparatus (10) is suitable at least for both pressing and dividing, as it comprises a press and a plurality of dividing edges (13). The apparatus (10) may also be configured to press only, and not actuating the dividing edges (13). In addition, the apparatus (10) may also be suitable for rounding, through a rounding movement (pr) of the base (11) in relation to the press (12) and the dividing edges (13). The press (12) and the dividing edges (13) are provided in the first position (p1), away from the base (11) and the tray (11a). No portion of dough is represented. The press mechanized means (15p), an actuatable structure which moves the press (12), are represented. Such press mechanized means (15p) comprise a main shaft (16). The dividing edges mechanized means (15d), an actuatable structure which moves the dividing edges (13), are also represented. The dividing edges mechanized means (15d) and the press mechanized means (15p) are configured to be moved jointly or independently.

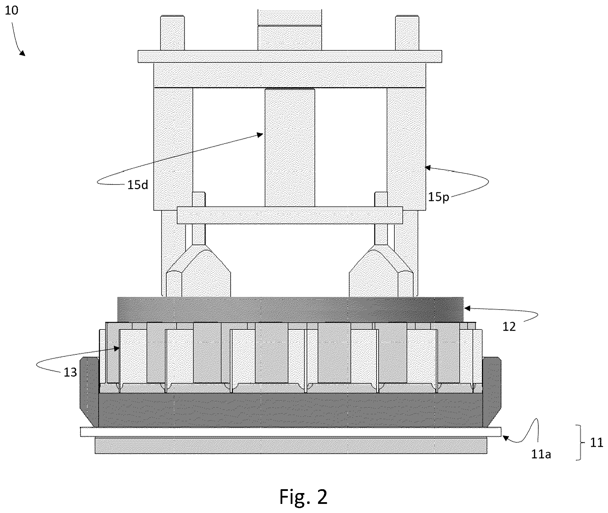

Figure 2 - a cross section representation of the apparatus (10) of Figure 1. Such representation sequentially follows the representation of Figure 1. The press (12) and the dividing edges (13) have been moved to the second position (p2), whereby the press (12) would be pressing a portion of dough (not shown) provided on the tray (11a) based on a measure of pressure. The dividing edges mechanized means (15d) and the press mechanized means (15p) have thus correspondingly jointly moved the dividing edges (13) and the press (12).

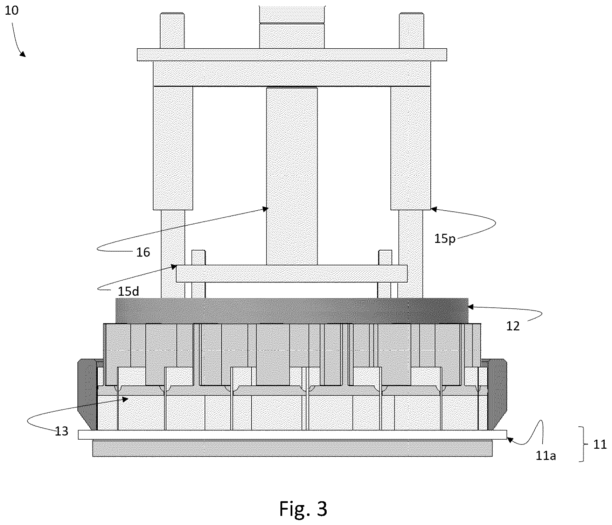

Figure 3 - a cross section representation of the apparatus (10) of Figures 1 and 2. Such representation sequentially follows the representation of Figure 2. The dividing edges (13) have been moved to the third position (p3), whereby they would be dividing a portion of dough (not shown) into a plurality of pieces. The dividing edges mechanized means (15d) have thus moved the dividing edges (13) independently of the press mechanized means (15p), wherein the press (12) remained inert.

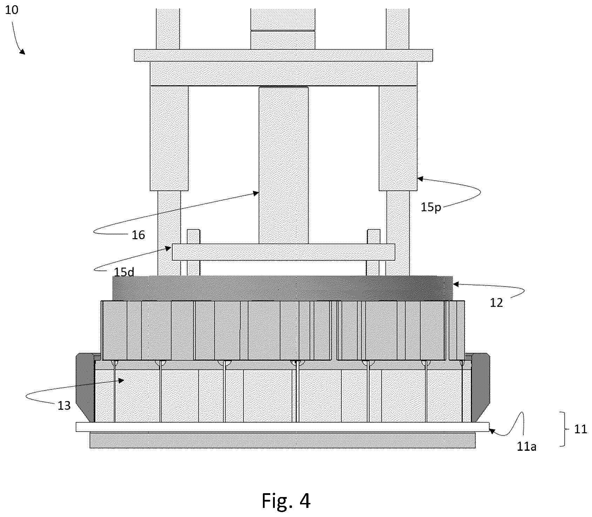

Figure 4 - a cross section representation of the apparatus (10) of Figures 1-3. Such representation sequentially follows the representation of Figure 3. The press (12) has been moved to the fourth position (p4), whereby it would be providing an additional chamber space for the divided pieces of dough, preceding rounding. Thus, the apparatus (10) is also suitable for rounding a plurality of divided pieces of dough. The press mechanized means (15p) have thus moved the press (12) independently of the dividing edges mechanized means (15d), wherein the dividing edges (13) remained inert.

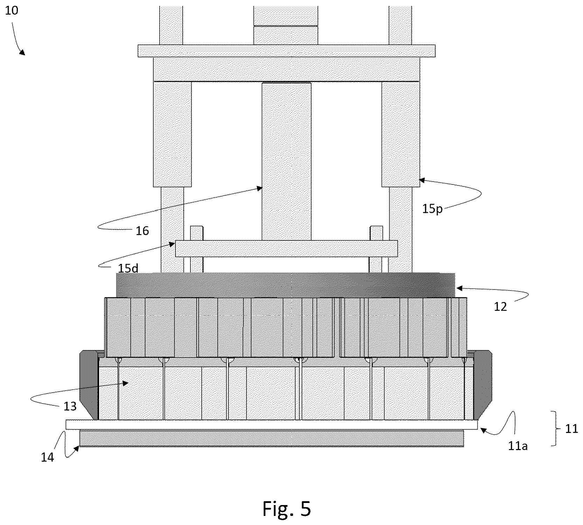

Figure 5 - a cross section representation of the apparatus (10) of Figures 1-4. Such representation sequentially follows the representation of Figure 4. Rounding means (14) associated with the base (11) and the tray (11a) (only indirectly shown) have moved, representing an eccentric movement of the base (11) which provides the rounding of the plurality of divided pieces within the respective chambers. Mechanized means which are part of the rounding means (14) (not shown) have thus been actuated. The press mechanized means (15p) and the dividing edges mechanized means (15d) have remained inert.

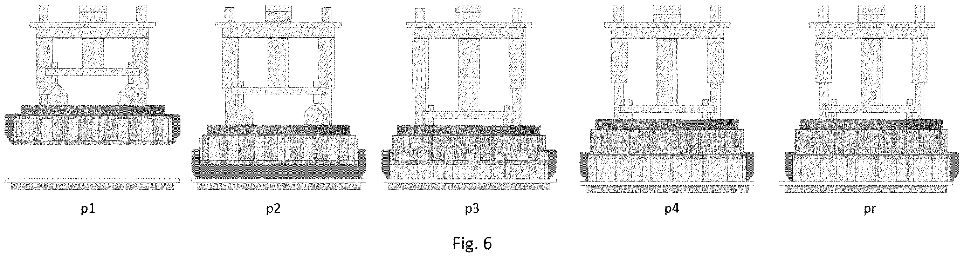

Figure 6 - a single representation of the sequential first (p1), second (p2), third (p3) and fourth positions (p4), as well as the rounding movement (pr), of figures 1-5.

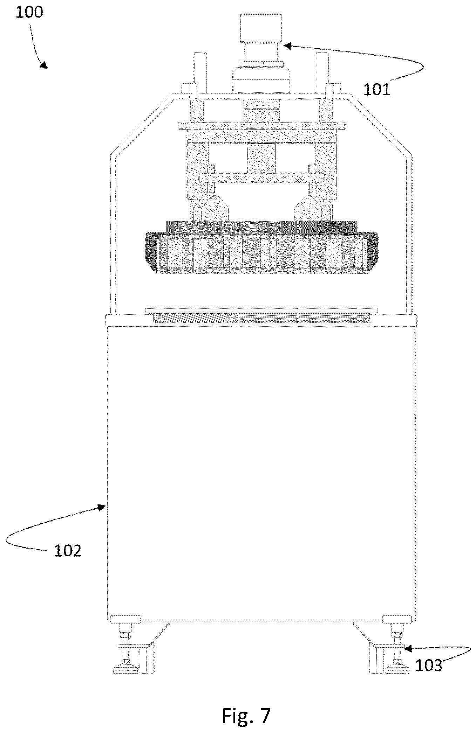

Figure 7 - a representation of an equipment (100) for automatically pressing, pressing and dividing or pressing, dividing and rounding a portion of dough, comprising the apparatus (10) of the present disclosure, particularly the apparatus (10) of figures 1-6. The equipment (100) is provided with top mechanized means (101) for actuating the press mechanized means (15p) and the dividing edges mechanized means (15d), a base structure (102) for supporting the apparatus (10), and feet (103) which support the whole assembly, and which may be adjustable.

### DETAILED DESCRIPTION

The present disclosure includes an apparatus (10) for automatically pressing a portion of dough, wherein the apparatus (10) may be further configured to automatically divide a portion of dough into a plurality of pieces and/or automatically divide a portion of dough into a plurality of pieces and subsequently round the divided pieces.

A first goal of an apparatus (10) for automatically pressing a portion of dough is to press a whole portion of dough in a desired amount of pressure. The apparatus (10) contains a press to perform such operation. Mechanical means move the press (12) such that it presses the portion of dough against a base. The dough is provided on a base, which may consist of a flat surface.

The press (12) is moved from a first position (p1) away from the base (11) - represented in Figure 1 - to a second position (p2) closer to the base (11) - represented in Figure 2 -, pressing the portion of dough in such position.

Upon pressing, the press (12) is moved again towards the first position (p1). A new, whole, portion of dough may then be provided in the base, for a new pressing operation.

The apparatus (10) may be further configured such that
when moving from the first position (p1) to the second position (p2), the movement control means control the movement of the press (12) based on a direct measure of the pressure of the press (12) exerted on the portion of dough.

Such configuration allows to control the approach of press to the portion of dough based on a measure of pressure. Thus, it enables a suitable adaptation of the apparatus (10) to the dough, not pressing it more than needed - an issue which occurs in mechanical distance-based - or time-based - presses.

When moving from the second position (p2) to the first position (p1), the movement control means control the movement of the press (12) based on a measure of distance to the base. The movement is, thus, differently controlled, whereby the combination of the two types of measurement provides an enhanced solution which is highly adaptable to different types of dough.

The movement from the first position (p1) to the second position (p2) is typically top towards bottom - as of Figure 1-, following the gravity vector and approaching the base (11) to provide the necessary pressing. It is the base (11) that operates as counterpart of the press (12) in the pressing of the portion of dough.

The movement from the second position (p2) to the first position (p1) is typically bottom towards top - considering a reverse movement from the position of Figure 2 to the position of Figure 1-, thus in the opposite sense to the gravity vector.

The apparatus (10) may comprise press mechanized means (15p) configured to be actuated by the movement control means and transfer mechanical movement to the press (12). Pressure may be directly measured based on pressure transducing means associated with the press mechanized means (15p), optionally the pressure transducing means measuring pressure on a main shaft (16) comprised by the press mechanized means (15p).

The second position (p2) may correspond to the position in which the pressure exerted by the press (12) on the portion of dough corresponds to a preset pressure.

The apparatus (10) may be further configured to, based on at least one parameter of the portion of dough, automatically adapting the preset pressure.

The distance to the base (11) may be measured based on a sensor measuring the distance between the base (11) and a reference point. The sensor may be an inductive sensor, which provides an enhanced operation and measurement of the apparatus (10).

Accordingly, a subsequent goal of an apparatus (10) further configured to divide a whole portion of dough is to divide it into a plurality of pieces. To do so, edges are moved towards the portion of dough, until they divide it into several pieces. The apparatus (10) now may contain a press having a plate from which dividing edges (13) protrude. Mechanical means move the assembly formed by the plate and dividing edges (13) such that the division is made.

The dough is provided on a base, which may consist of a flat surface. If the apparatus (10) is further configured to round the divided pieces, when the division is made each divided piece of dough is enclosed in a chamber formed by at least two edges, the plate of the press (12) and the base. In an embodiment, the plate of the press (12) may be circular. The dividing edges (13) may be arranged radially, extending from a center of the plate of the press (12) towards its perimeter. The base (11) may correspondingly be circular.

The chamber in which each divided piece of dough is provided will also be used to round such piece of dough. By resorting to rounding movements (pr) performed by the apparatus (10), each divided piece is rounded. The formed chamber may completely enclose the divided piece of dough.

The movement of the press (12) and the dividing edges (13) is as follows. Firstly, the press (12) and the dividing edges (13) move jointly from the first position (p1) to the second position (p2) - as provided in the change from Figure 1 to Figure 2 -, the press (12) pressing the portion of dough. The dividing edges (13) then move to the third position (p3) - as provided in Figure 3 -, moving in relation to the press (12) towards the base, dividing the portion of dough into pieces of dough. Upon division, the press (12) and the dividing edges (13) then jointly move back to the first position (p1) - a movement from the position of Figure 3 to the position of Figure 1. A new pressing and division cycle may then be initiated.

In such case, the apparatus (10) is thus further configured to divide the portion of dough upon pressing and comprises a plurality of dividing edges (13),
the dividing edges (13) being jointly movable with the press (12) from the first to the second position (p2), and being further movable to a third position (p3) in a direction of the base, and thereby divide the portion of dough provided in the base (11) into a plurality of pieces.

Such configuration allows to control the approach of the dividing edges (13) to the portion of dough based on a measure of pressure and the subsequent movement of dividing edges (13) therefrom.

When moving from the second position (p2) to the third position (p3), the movement control means control the movement of the dividing edges (13) to the press (12) based on a measure of distance

Such distance may be a distance between the press (12) and the dividing edges (13), or a distance between the press (12) and the base.

The dividing edges (13) may consist of a plurality of blades which are circumferentially arranged and which radially extend. Figures 1-7 present such blades in a side view. When rounding is performed, the respective chambers are thus formed by such radially extending blades, the press (12) and the base.

The apparatus may further comprise dividing edges mechanized means (15d) configured to be actuated by the movement control means and transfer mechanical movement to the dividing edges (13), wherein the dividing edges mechanized means (15d) are independently controllable and movable with regard to the press mechanized means (15p), both being controllable by the movement control means.

When providing rounding, the apparatus (10) is further configured to round the divided pieces of dough upon division and comprises rounding means (14) associated with the base, the rounding means (14) being configured to round the plurality of pieces of dough upon division, while the dividing edges (13) are still provided beyond the press (12) upon division.

The rounding process in an apparatus (10) for dough dividing and rounding seeks to mimic the traditional hand-rolling method, ensuring that each piece of dough achieves a round form with a smooth surface. This is relevant for consistent baking and can affect the characteristics of the final product. During rounding, the divided pieces of dough are rolled and shaped within the machine.

The press (12) is thus further movable in relation to the dividing edges (13) to a fourth position (p4) in a direction away from the base.

Therefore, the press (12) and the dividing edges (13) jointly move from the first position (p1) to the second position (p2) for pressing the portion of dough, moving towards the base (11) - the movement from the position of Figure 1 to the position of Figure 2. Then, the dividing edges (13) move to the third position (p3) (the movement from the position of Figure 2 to the position of Figure 3), moving in relation to the press (12) - which remains inert or substantially inert. The press (12) then moves away from the base, towards the fourth position (p4) - the slighter movement from the position of Figure 3 to the position of Figure 4. The fourth position (p4) is closer to the base (11) than the first position (p1), and further away from the base (11) than the second position (p2). Upon rounding, the press (12) and the dividing edges (13) jointly move from the fourth position (p4) to the first position (p1).

The movement of the press (12) to the fourth position (p4) allows that the chamber formed by the press (12), the dividing edges (13) and the base (11) provides space for the rounding. By moving away from the position which corresponds to the second position (p2) of the press (12), the press (12) allows such space, enhancing the rounding procedure.

In addition, it enables a suitable adaptation of the apparatus (10) to the portion of dough, particularly relevant when rounding. The control based on pressure allows to set the press (12) and the edges in a position which corresponds to the characteristics of the dough, enabling a uniformity of the divided and rounded pieces of dough without overstressing it. This adaptation is relevant in all types of dough, but particularly in very hydrated types of dough.

When the press (12) moves from the third position (p3) to the fourth position (p4), its movement in relation to the dividing edges (13) is controlled by the movement control means based on a measure of distance.

Such distance may be a distance between the press (12) and the dividing edges (13), or a distance between the press (12) and the base.

The rounding means (14) thus finalize the pressing - dividing - rounding process by rounding the plurality of pieces of dough, while the dividing edges (13) are still provided beyond the press (12) upon division (and, as referred, the press (12) is in the fourth position (p4)).

Upon rounding, the movement control means control the joint movement of the press (12) and the dividing edges (13) to the first position (p1). A new cycle may then be initiated. The new cycle may be a pressing - dividing - rounding process, a pressing - dividing process or a pressing process.

The rounding process is performed through the movement of the base (11) in relation to the press (12) and the dividing edges (13). Thus, the sides of the chamber - the dividing edges (13) - and its top - the press (12) - remain inert, while the bottom of the chamber - the base (11) / base (11) including tray (11a) - move. The rounding means (14) may thus include means for providing an eccentric rotation of the base, guaranteeing the rounding of the pieces of though provided within the chamber. The rounding means (14) may thus comprise an eccentric to provide such movement of the base (11) / base (11) including tray (11a).

Based on at least one parameter of the dough, the preset pressure may be adapted. For instance, based on the moisture of the dough, the preset pressure may be defined. This allows a further enhanced solution in which the apparatus (10) automatically adapts to each type of dough. A sensor may be provided in order to determine the parameter of the dough, for instance moisture and/or temperature.

The same advantages are correspondingly obtained by the method of the present disclosure.

The present disclosure may further comprise an equipment (100) for automatically pressing a portion of dough, pressing portion of dough and dividing such portion into a plurality of pieces or pressing a portion of dough, dividing such portion into a plurality of pieces and rounding such pieces.

The equipment (100) may comprise the apparatus (10) of the present disclosure. The equipment (100) is provided with top mechanized means (101) for actuating the press mechanized means (15p) and the dividing edges mechanized means (15d), a base structure (102) for supporting the apparatus (10), and feet (103) which support the whole assembly, and which may be adjustable.

Although the present disclosure is mainly described in terms of apparatuses and methods, the skilled person understands that it is also directed to various devices which may include one or more controllers and/or computational devices, installed locally or remotely.

For instance, the method of the present disclosure may be implemented by the apparatus (10) of the present disclosure, including an electronic or computational device installed locally or remotely.

The apparatus (10) of the present disclosure comprises an electronic or computational device or, for instance, a programmable controller, having computational means installed locally or remotely. The movement control means may comprise or consist of such an electronic or computational device.

The apparatus (10) may include components to perform at least some of the example features and features of the methods described, whether through hardware components (such as memory and / or processor), software or any combination thereof.

An article for use with the apparatus (10), such as a pre-recorded storage device or other similar computer-readable medium, including program instructions recorded on it, or a computer data signal carrying readable program instructions computer can direct a device to facilitate the implementation of the methods described herein. It is understood that such apparatus (10), articles of manufacture and computer data signals are also within the scope of the present disclosure.

A "computer-readable medium" means any medium that can store instructions for use or execution by a computer or other computing device, including read-only memory (ROM), erasable programmable read-only memory (EPROM) or flash memory, random access memory (RAM), a portable floppy disk, a drive hard drive (HDD), a solid state storage device (for example, NAND flash or synchronous dynamic RAM (SDRAM)), and/or an optical disc such as a Compact Disc (CD), Digital Versatile Disc (DVD) or Blu-Ray ^{™} Disc.

As will be clear to one skilled in the art, the present disclosure should not be limited to the embodiments described herein, and a number of changes are possible which remain within the scope of the present disclosure.

Of course, the preferred embodiments shown above are combinable, in the different possible forms, being herein avoided the repetition all such combinations.

## Claims

**1.** An apparatus (10) for automatically pressing a portion of dough, the apparatus (10) comprising a base (11) for providing the portion of dough and a press movable between base (11) and a second position (p2) closer to the base
wherein the apparatus (10) further comprises movement control means configured to move the press (12), the movement control means being further configured such that
when moving from the first position (p1) to the second position (p2), the movement control means control the movement of the press (12) based on a direct measure of the pressure of the press (12) exerted on the portion of dough.

**2.** An apparatus (10) according to the previous claim wherein the movement control means are further configured such that
when moving from the second position (p2) to the first position (p1), the movement control means control the movement of the press (12) based on a measure of distance to the base.

**3.** An apparatus (10) according to the previous claim wherein the apparatus further comprises press mechanized means configured to be actuated by the movement control means and transfer mechanical movement to the press, wherein pressure is directly measured based on pressure transducing means associated with the press mechanized means, optionally pressure transducing means measuring pressure on a main shaft comprised by the press mechanized means.

**4.** An apparatus (10) according to the previous claim wherein the second position (p2) corresponds to the position in which the pressure exerted by the press (12) on the portion of dough corresponds to a preset pressure.

**5.** An apparatus (10) according to the previous claim wherein it is further configured to, based on at least one parameter of the portion of dough, automatically adapting the preset pressure.

**6.** An apparatus (10) according to any of the preceding claims wherein the distance to the base (11) is measured based on a sensor measuring the distance between the base (11) and a reference point.

**7.** An apparatus (10) according to the previous claim wherein the sensor is an inductive sensor.

**8.** An apparatus (10) according to any of the preceding claims wherein it is further configured to divide the portion of dough upon pressing and comprises a plurality of dividing edges (13),
the dividing edges (13) being jointly movable with the press (12) from the first to the second position (p2), and being further movable to a third position (p3) in a direction of the base, and thereby divide the portion of dough provided in the base (11) into a plurality of pieces.

**9.** An apparatus (10) according to the previous claim wherein the movement control means are further configured such that
when moving from the second position (p2) to the third position (p3), the movement control means control the movement of the dividing edges (13) to the press (12) based on a measure of distance,
and, optionally, the movement control means are further configured such to, upon division, control a joint movement of the press (12) and the dividing edges (13) to the first position (p1).

**10.** An apparatus (10) according to any of the preceding claims wherein the base (11) comprises a tray (11a), the tray (11a) being removable from the base (11) and being suitable for the dough to be provided on.

**12.** An apparatus (10) according to any of the preceding claims when depending of claim 8, wherein it is further configured to round the divided pieces of dough upon division and comprises rounding means (14) associated with the base, wherein
the press (12) is further movable in relation to the dividing edges (13) to a fourth position (p4) in a direction away from the base,
the rounding means (14) being configured to subsequently round the plurality of pieces of dough, while the dividing edges (13) are still provided beyond the press (12) upon division.

**13.** An apparatus (10) according to the previous claim wherein the movement control means are further configured such that, when moving from the third position (p3) to the fourth position (p4), the movement control means control the movement of the press (12) in relation to the dividing edges (13) based on a measure of distance.

**14.** A method for automatically pressing a portion of dough, the method comprising the steps of providing a portion of dough on a base,
moving a press from a first position (p1) to a second position (p2) towards the portion of dough, such that
when moving from the first position (p1) to the second position (p2), the movement of the press (12) is based on a direct measure of the pressure of the press (12) exerted on the portion of dough.

**15.** A method according to the previous claim wherein, upon pressing, the press (12) is moved to the first position (p1) based on a measure of distance, optionally of distance to the base.
